# EUROPÄISCHE PATENTSCHRIFT

(11) **EP 2 607 293 B1**
(45) Veröffentlichungstag und Bekanntmachung des Hinweises auf die Patenterteilung: **07.01.2015**
(21) Anmeldenummer: 12007864.7
(22) Anmeldetag: 22.11.2012
(51) Int. Cl.: B66F 9/075

(54) **Batteriebetriebenes Flurförderzeug**
Battery-powered industrial truck
Chariot de manutention fonctionnant sur batterie

(30) Priorität: 23.12.2011 DE 102011122347
(43) Veröffentlichungstag der Anmeldung: 26.06.2013
(73) Patentinhaber: Jungheinrich Aktiengesellschaft, 22047 Hamburg (DE)
(72) Erfinder: Badura, Klaus-Peter, 21357 Barum (DE); Demir, Hüseyin, 21447 Handorf (DE); Thomanek, Georg, 21073 Hamburg (DE)
(74) Vertreter: Hauck Patent- und Rechtsanwälte

(56) Entgegenhaltungen:
- EP-A2- 1 184 242
- DE-A1- 19 956 623
- DE-A1-102011 015 936
- GB-A- 2 276 360
- US-B1- 6 494 279

## Beschreibung

Die vorliegende Erfindung betrifft ein Flurförderzeug mit einem batteriegespeisten elektrischen Antrieb, das ein Batteriefach zur Aufnahme einer Batterie besitzt

Derartige Flurförderzeuge sind beispielsweise aus DE 10 2004 047 339 A1 und aus DE 10 2009 034 703 A1 bekannt.

Batteriegespeiste elektrische Flurförderzeuge besitzen ein Batteriefach, das die Batterie aufnehmen kann. In der Regel wird zum Wiederaufladen der Batterie das Batteriefach geöffnet und die Batterie aus dem Batteriefach entnommen. Es ist aber auch möglich, über elektrische Kontakte die Batterie im Batteriefach zu laden. Eine elektrische Verbindung der Batterie mit dem elektrischen Antrieb erfolgt in der Regel innerhalb des Batteriefachs, wobei es bekannt ist, automatisch durch ein Einschieben der Batterie in das Batteriefach den elektrischen Kontakt zu dem Antrieb herzustellen. Auch ist es möglich, über gesonderte Steckerverbindungen einen elektrischen Kontakt zwischen Batterie und Antrieb manuell herzustellen. Hierbei versteht es sich, dass die Batterie nicht unmittelbar mit dem elektrischen Antrieb, sondern über eine entsprechende Fahrzeugsteuerung mit dem elektrischen Antrieb verbunden wird.

Aus GB 2,276,360 ist ein elektrisch betriebenes Flurförderzeug bekannt, bei dem ein Batteriefach über einen schwenkbar angeordneten Deckel verschließbar ist. In dem Batteriefach ist ein vorstehender Stift vorgesehen, der durch die Rückseite der Batterie kontaktiert wird, um einen Schalter zu betätigen, durch den der Stromkreis für die Batterie geschlossen wird. Der Deckel für das Batteriefach ist als Armlehne ausgebildet.

Aus US 6,494,279 B1 ist ein geschlossenes Batteriesystem bekannt, bei dem ein in dem Batteriefach angeordneter Schalter durch eine Scharnierklappe des Bätteriefachs betätigt wird.

Der Erfindung liegt die Aufgabe zugrunde, die Sicherheit der elektrischen Kontaktierung einer Batterie mit dem elektrischen Antrieb des Flurförderzeugs zu verbessern.

Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Das erfindungsgemäße Flurförderzeug weist einen batteriegespeisten elektrischen Antrieb auf. Ferner besitzt das Flurförderzeug ein Batteriefach zur Aufnahme einer Batterie, wobei das Batteriefach eine Batterieklappe und elektrische Kontaktmittel für eine elektrische Verbindung der Batterie mit dem elektrischen Antrieb besitzt. Die Batterieklappe ist quer zur Fahrzeuglängsrichtung angeordnet und um eine in Fahrzeuglängsrichtung verlaufende Schwenkachse schwenkbar an dem Fahrzeugkörper gelagert. Die Batterieklappe öffnet somit seitlich zu dem Fahrzeug und gibt einen Zugang zum Batteriefach von der Fahrzeugseite her frei. Durch die Batterieklappe wird das Batteriefach verschlossen, so dass die Batterie vor Umwelteinflüssen geschützt ist. Erfindungsgemäß ist eine Schalteinheit in dem Batteriefach angeordnet, die von der Batterieklappe in ihrer geschlossenen Position betätigt wird, um eine elektrische Verbindung zwischen dem elektrischen Kontaktmittel und dem elektrischen Antrieb herzustellen oder um eine gesperrte Funktion des Fahrzeugs freizugeben. Erfindungsgemäß ist die Batterieklappe an ihrem freien Ende mit einer Betätigungsnase ausgestattet, über die die Schalteinheit in dem Batteriefach betätigt wird. Die Anordnung der Betätigungsnase an dem freien Ende der Batterieklappe stellt sicher, dass die Schalteinheit erst dann betätigt wird, wenn die Batterieklappe vollständig oder nahezu vollständig geschlossen ist. Auch wird sichergestellt, dass direkt mit dem Öffnen der Batterieklappe die Schalteinheit betätigt wird, um die elektrische Verbindung zu unterbrechen. Die erfindungsgemäße Schalteinheit stellt somit sicher, dass die elektrisch leitende Verbindung zwischen Batterie und elektrischem Antrieb, einschließlich der Fahrzeugsteuerung, erst erfolgt, wenn das Batteriefach durch die Batterieklappe geschlossen wurde. Hierdurch wird sichergestellt, dass beim Einsetzen und Herausnehmen der Batterie aus dem Batteriefach und nach Kontaktieren der Batteriepole mit dem elektrischen Kontaktmittel der Stromkreis zu dem elektrischen Antrieb unterbrochen ist, solange die Batterieklappe geöffnet ist. In der Variante, in der mindestens eine gesperrte Funktion des Fahrzeugs, insbesondere eine Fahr- oder Hubfunktion freigegeben wird, kann eine elektrische Verbindung bereits vorliegen, so dass eine Steuerung des Fahrzeugs mit Strom versorgt wird. Die Steuerung gibt dann gesperrte Funktionen des Fahrzeugs frei, wenn die Schalteinheit betätigt wurde. Ein besonderer Vorteil der vorliegenden Erfindung besteht darin, dass durch die Unterbrechung der elektrischen Verbindung oder die nicht freigegebene Funktion des Fahrzeugs erreicht wird, dass das Fahrzeug nur bei geschlossener Batterieklappe betätigt werden kann.

In einer bevorzugten Ausgestaltung weist die Schalteinheit einen Schalter auf, der die elektrische Verbindung zwischen dem elektrischen Kontaktmittel und dem elektrischen Antrieb direkt schließt. Hierbei ist der Schalter der Schalteinheit ausgelegt, um den Stromkreis zu der Batterie mit mehreren Amperestunden Kapazität zu schalten. Alternativ ist es möglich, dass die Schalteinheit einen Sensor und ein Schütz aufweist, wobei das Schütz ansprechend auf ein von dem Sensor generiertes Sensorsignal die elektrische Verbindung schließt. Das Schütz selbst muss nicht im Batteriefach angeordnet sein, sondern kann sich auch an einer beliebig anderen Position des Fahrzeugs befinden und über Leitungen mit dem Sensor verbunden sein.

Eine weitere mögliche Ausgestaltung Schalteinheit sieht vor, dass diese einen Sensor aufweist, dessen Signale an der Fahrzeugsteuerung anliegen. Wenn an der Fahrzeugsteuerung ein Signal für ein geschlossenes Batteriefach anliegt, dann gibt die Fahrzeugsteuerung mindestens eine Funktion des Fahrzeugs, insbesondere eine oder mehrere Fahr- und/oder Hubfunktionen frei. In einer bevorzugten Weiterbildung dieser Ausgestaltung kann die Fahrzeugsteuerung auch ansprechend auf ein Sehsorsignat, das eine geöffnete Batterieklappe anzeigt, mindestens eine Funktionen des Fahrzeugs sperren, so dass sichergestellt ist, dass das Fahrzeug nicht mit geöffneter Batterieklappe betrieben werden kann. Die gesperrte Funktion wird beim Schließen der Batterieklappe durch eine erneute Betätigung der Schalteinheit wieder freigegeben.

In der vorliegenden Anmeldung wird wenn nachfolgend auf die Schalteinheit Bezug genommen wird, stets auf jede der drei möglichen Ausgestaltungen für die Schalteinheit abgestellt.

In einer bevorzugten Weiterbildung ist der Schalteinheit derart ausgebildet, dass bei einer geöffneten Batterieklappe die elektrische Verbindung zwischen dem Kontaktmittel und dem Antrieb unterbrochen ist. Die Schalteinheit stellt also sicher, dass bei einem Öffnen der Batterieklappe eine elektrische Verbindung der Batterie zu dem elektrischen Antrieb unterbrochen wird. Auch hierdurch wird sichergestellt, dass das Fahrzeug mit einer geöffneten Batterieklappe nicht weiter betätigt werden kann.

In einer bevorzugten Ausgestaltung weist die Schalteinheit einen Schalterarm auf, der mit seinem freien Ende in das Batteriefach weist. Die Ausgestaltung der Schaltereinheit mit dem Schalterarm erlaubt es, die Schalteinheit im Batteriefach anzuordnen, ohne dass die Schalteinheit die Öffnung des Batteriefachs zum Entnehmen und Einführen der Batterie versperrt. Auch wird hierdurch ein Nachrüsten von bereits bestehenden Flurförderzeugen mit einer entsprechenden Schalteinheit ermöglicht, um die Sicherheit des Fahrzeugs zu verbessern.

In einer weiter bevorzugten Ausgestaltung sind die elektrischen Kontaktmittel des Flurförderzeugs als Stecker ausgebildet. Bei einem Einführen der Batterie in das Batteriefach wird dann durch die Einführbewegung eine elektrisch leitende Verbindung zu den Polen über die Stecker erzielt.

Eine bevorzugte Ausgestaltung der Erfindung wird anhand eines Ausführungsbeispiels nachfolgend erläutert.

Es zeigt:
- Fig. 1: eine perspektivische Detailansicht eines Flurförderzeugs in einer Ansicht von schräg vorne mit einem Blick auf das Lastteil und das Antriebsteil des Flurförderzeugs,
- Fig. 2: eine perspektivische Detailansicht des Flurförderzeugs aus Fig. 1 mit geschlossener Batterieklappe.
- Fig. 3: eine perspektivische Detailansicht von oben mit einem Blick in das Batteriefach.

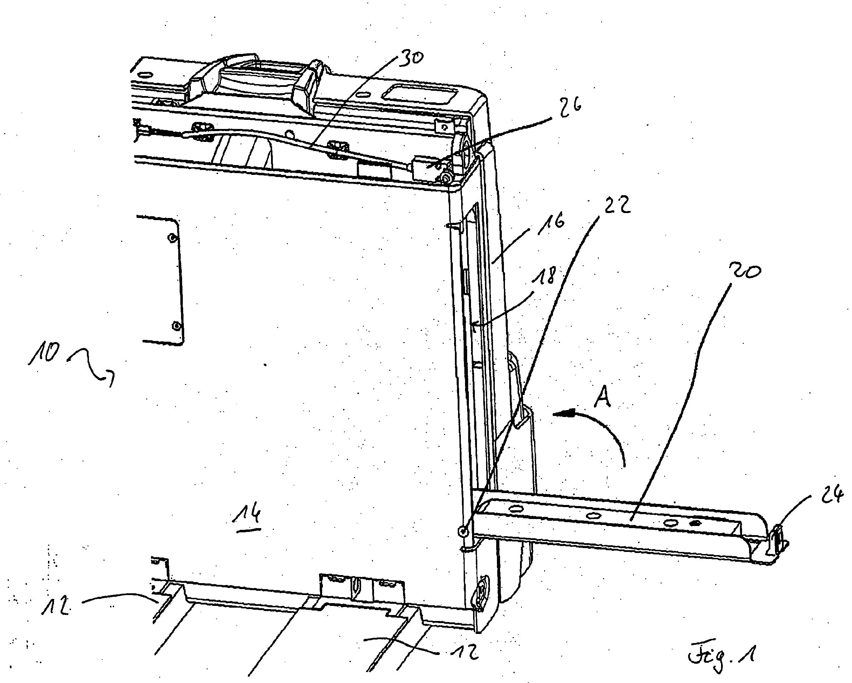

Fig. 1 zeigt einen Gabelhubwagen 10 mit zwei nach vorne vorstehende Hubgabeln 12. Der Fahrzeugkörper weist ein anhebbares Lastteil 14 und ein mit diesem verbundenes Antriebsteil 16 auf. Das Antriebsteil kann deichselgeführt sein, wobei die Deichsel zur besseren Übersicht nicht dargestellt ist. Das Lastteil 14 besitzt ein Batteriefach 18 mit einer seitlichen Öffnung. Das Batteriefach erstreckt sich über die Breite des Fahrzeugs quer zu dessen Längsrichtung. Das Batteriefach 18 ist beim regulären Betrieb des Flurförderzeugs geschlossen. In der Darstellung gemäß Fig. 1 ist die Abdeckung (nicht dargestellt) von dem Antriebsteil 14 entfernt, so dass ein Blick in das Batteriefach von oben möglich ist.

Das Batteriefach 18 besitzt eine Batterieklappe 20, die an einer Schwenkachse 22 an dem Lastteil 14 angeordnet ist. Durch Anheben der Batterieklappe 20 in Richtung des Pfeils A wird das Batteriefach 18 geschlossen. Die Batterieklappe 20 besitzt an ihrem freien Ende eine vorstehende Befestigungsnase 24, die beispielsweise durch Einschnappen die Batterieklappe 20 in ihrer geschlossenen Position sichert.

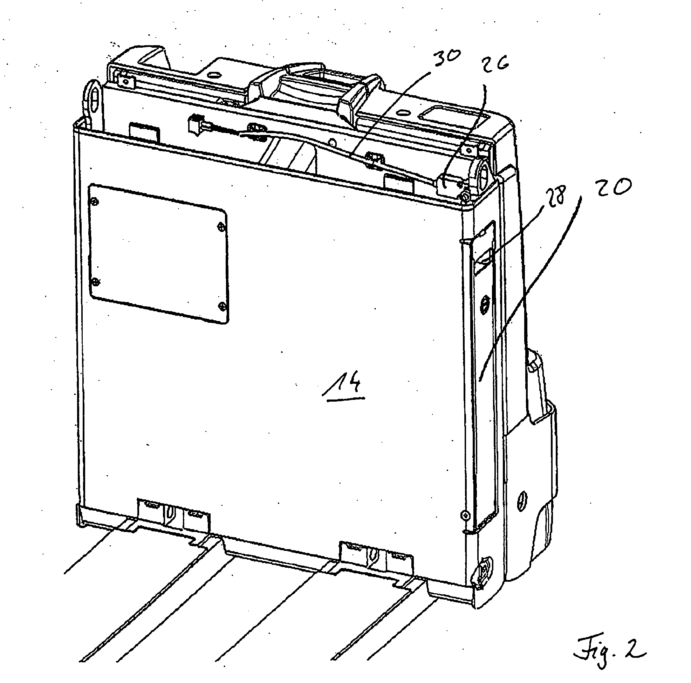

Fig. 2 zeigt das Flurförderzeug aus Fig. 1 mit geschlossener Batterieklappe 20. Die Batterieklappe 20 verschließt das Batteriefach 18 bündig zu der Seitenwand des Flurförderzeugs. Zum Öffnen des Batteriefachs 18 ist ein Eingriff 28 vorgesehen, der ein Ergreifen der Batterieklappe 20 erlaubt.

In Fig. 1 und Fig. 2 ist ein Blick in das Batteriefach 18 von oben möglich. Oberhalb der seitlichen Öffnung des Batteriefachs 18 ist eine elektrische Schalteinheit 26 mit einem elektrischen Kabel 30 vorgesehen. Die Führung des Kabels 30 erfolgt oberhalb des Batteriefachs und kollidiert nicht mit der Batterie im Inneren des Batteriefachs. Die Schalteinheit 26 wirkt mit der Befestigungsnase 24 beim Öffnen und Schließen der Batterieklappe zusammen.

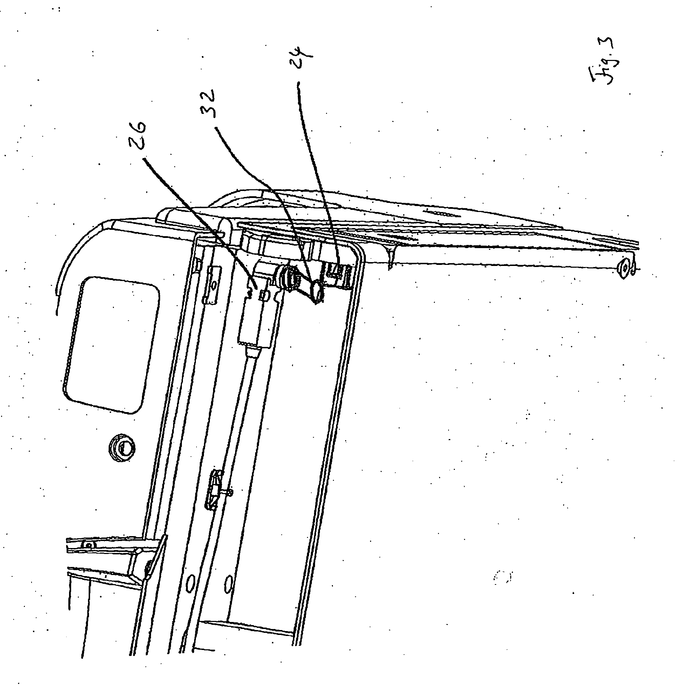

Fig. 3 zeigt in einer Ansicht von oben die Schalteinheit 26 mit seinem Schalterarm 32, der in das Batteriefach ungefähr bis zur Höhe der seitlichen Öffnung in das Batteriefach hineinragt. Die Befestigungsnase 24 des Batteriedeckels stößt im geschlossenen Zustand an den Schalterarm an und lenkt diesen aus. Durch Schließen der Batterieklappe wird der Schalterarm 32 nach innen in das Batteriefach hinein ausgelenkt, so dass die Schalteinheit 26 den die Batterie mit dem Antriebsteil verbindenden Stromkreis schließen kann. Beim Öffnen der Batterieklappe gibt die Befestigungsnase den Schalterarm frei und erlaubt es so, den Stromkreis, der die Batterie mit dem Fahrzeug verbindet, zu unterbrechen. Die Schalteinheit 26 kann dabei entweder als ein Schalter oder als ein Sensor ausgeführt sein. Bei der Ausführung als Schalter schaltet dieser direkt den Stromkreis der die Batterie mit dem Antrieb und/oder einer Steuerung des Fahrzeugs verbindet. Bei der Ausgestaltung als Sensor ist der Sensor entweder mit einem Schütz (nicht dargestellt) oder mit der Fahrzeugsteuerung (nicht dargestellt) verbunden.

Ansprechend auf ein Sensorsignal beim Öffnen oder Schließen der Batterieklappe wird von dem Schütz die elektrische Verbindung zu der Batterie getrennt oder geöffnet oder es werden von der Fahrzeugsteuerung eine oder mehrere Funktionen des Fahrzeugs, insbesondere Fahr- und Hubfunktionen, gesperrt oder freigegeben.

## Patentansprüche

1. Flurförderzeug mit einem batteriegespeisten elektrischen Antrieb, das ein Batteriefach zur Aufnahme einer Batterie aufweist, wobei das Batteriefach eine Batterieklappe und ein elektrisches Kontaktmittel für eine elektrische Verbindung der Batterie mit dem elektrischen Antrieb aufweist, wobei die Batterieklappe (20) quer zur Fahrzeuglängsrichtung angeordnet ist und um eine in Fahrzeuglängsrichtung verlaufende Schwenkachse (22) schwenkbar gelagert ist und
eine Schalteinheit (26) vorgesehen ist, die in dem Batteriefach (18) angeordnet ist und von der Batterieklappe (20) in ihrer geschlossenen Position betätigt wird, um eine elektrische Verbindung zwischen dem elektrischen Kontaktmittel und dem elektrischen Antrieb herzustellen oder eine gesperrte Funktion des Fahrzeugs freizugeben, **dadurch gekennzeichnet, dass** die Batterieklappe (20) an ihrem freien Ende eine Betätigungsnase (24) aufweist, über die die Schalteinheit (26) im Batteriefach (18) betätigt wird.

2. Flurförderzeug nach Anspruch 1, **dadurch gekennzeichnet, dass** die Schalteinheit (26) einen Schalter aufweist, der die elektrische Verbindung schließt.

3. Flurförderzeug nach Anspruch 1, **dadurch gekennzeichnet, dass** die Schalteinheit einen Sensor und ein Schütz aufweist, wobei das Schütz ansprechend auf ein von dem Sensor generiertes Sensorsignal die elektrische Verbindung schließt.

4. Flurförderzeug nach Anspruch 1, **dadurch gekennzeichnet, dass** die Schalteinheit einen Sensor aufweist, wobei ein von dem Sensor generiertes Sensorsignal an einer Steuerung des Fahrzeugs anliegt, die die gesperrte Funktion des Fahrzeugs freigibt.

5. Flurförderzeug nach einem der Ansprüche 1 bis 4, **dadurch gekennzeichnet, dass** die Schalteinheit (26) derart ausgebildet ist, dass bei einer geöffneten Batterieklappe (20) die elektrische Verbindung zwischen Kontaktmittel und Antrieb unterbrochen ist.

6. Flurförderzeug nach Anspruch 4 und 5, **dadurch gekennzeichnet**, die Steuerung des Fahrzeugs ansprechend auf das von dem Sensor generierte Signal für eine geöffnete Batterieklappe mindestens eine weitere Funktion des Fahrzeugs sperrt.

7. Flurförderzeug nach Anspruch 1, **dadurch gekennzeichnet, dass** die Schalteinheit (26) einen Schalterarm (32) aufweist, der mit seinem freien Ende in das Batteriefach weist.

8. Flurförderzeug nach Anspruch 1 bis 7, **dadurch gekennzeichnet, dass** die elektrischen Kontaktmittel als Stecker ausgebildet sind.

## Claims

1. An industrial truck having a battery-powered electrical drive and comprising a battery compartment for accommodating a battery, wherein the battery compartment comprises a battery door and an electrical contact means for electrical connection of the battery with the electrical drive, wherein the battery door (20) is arranged crosswise to the longitudinal direction of the vehicle and is pivotally mounted around a swivel axis (22) running in the longitudinal direction of the vehicle, and a switch unit (26) is provided which is arranged in the battery compartment (18) and is actuated by the battery door (20) in its closed position in order to establish an electrical connection between the electrical contact means and the electrical drive, or to unblock a blocked function of the vehicle, **characterised in that** the battery door (20) has an actuation lug (24) at its free end, via which the switch unit (26) in the battery compartment is actuated.

2. The industrial truck according to claim 1, **characterised in that** the switch unit (26) comprises a switch, which closes the electrical connection.

3. The industrial truck according to claim 1, **characterised in that** the switch unit comprises a sensor and a contactor relay, wherein the contactor relay closes the electrical connection in response to a sensor signal generated by the sensor.

4. The industrial truck according to claim 1, **characterised in that** the switch unit comprises a sensor, wherein a sensor signal generated by the sensor is applied to a control unit of the vehicle, which unblocks the blocked function of the vehicle.

5. An industrial truck according to any one of claims 1 to 4, **characterised in that** the switch unit (26) is realised such that when the battery door (20) is open, the electrical connection between contact means and drive is interrupted.

6. The industrial truck according to the claims 4 and 5, **characterised in that** the control unit of the vehicle blocks at least one further function of the vehicle in response to the signal for an open battery door generated by the sensor.

7. The industrial truck according to claim 1, **characterised in that** the switch unit (26) comprises a switch arm (32), which points into the battery compartment with its free end.

8. An industrial truck according to claim 1 to 7, **characterised in that** the electrical contact means are realised as plugs.

## Revendications

1. Chariot de manutention avec un entraînement électrique alimenté par batterie, et comportant un compartiment de batterie pour loger une batterie, dans lequel le compartiment de batterie comporte une porte du compartiment de batterie et un moyen de contact électrique pour une connexion électrique de la batterie avec l'entraînement électrique, la porte du compartiment de batterie (20) étant agencée transversalement au sens longitudinal du véhicule et étant logé pour pouvoir pivoter autour d' une axe de pivotement (22) s'étendant dans le sens longitudinal du véhicule, et une unité de commutation (26) étant pourvue qui est agencée dans le compartiment de batterie (18) et est actionnée par la porte du compartiment de batterie (20) dans sa position fermée pour établir une connexion électrique entre le moyen de contact électrique et l'entraînement électrique ou pour débloquer une fonction bloquée du véhicule, **caractérisé en ce que** la porte du compartiment de batterie (20) a une saillie d'actionnement (24) dans son extrémité libre, à travers laquelle l'unité de commutation (26) dans le compartiment de batterie est actionnée.

2. Chariot de manutention selon la revendication 1, **caractérisé en ce que** l'unité de commutation (26) comporte un commutateur, qui ferme la connexion électrique.

3. Chariot de manutention selon la revendication 1, **caractérisé en ce que** l'unité de commutation comporte un capteur et un contacteur, le contacteur fermant la connexion électrique en réponse à un signal de capteur généré par the capteur.

4. Chariot de manutention selon la revendication 1, **caractérisé en ce que** l'unité de commutation comporte un capteur, un signal de capteur généré par le capteur étant appliqué à une unité de commande du véhicule qui débloque la fonction bloquée du véhicule.

5. Chariot de manutention selon l'une quelconque des revendications 1 à 4, **caractérisé en ce que** l'unité de commutation (26) est réalisée tellement que quand la porte du compartiment de batterie (20) est ouverte, la connexion électrique entre le moyen de contact et l'entraînement est interrompue.

6. Chariot de manutention selon les revendications 4 et 5, **caractérisé en ce que** l'unité de commande du véhicule bloque au moins une autre fonction du véhicule en réponse au signal pour une porte du compartiment de batterie ouverte généré par le capteur.

7. Chariot de manutention selon la revendication 1, **caractérisé en ce que** l'unité de commutation (26) comporte un bras de commutateur (32), qui montre vers le compartiment de batterie avec son extrémité libre.

8. Chariot de manutention selon la revendication 1 to 7, **caractérisé en ce que** les moyens de contact électriques sont réalisés comme des prises.
